# FASCICULE DE BREVET EUROPEEN

(11) **EP 4 031 411 B1**
(45) Date de publication et mention de la délivrance du brevet: **27.09.2023**
(21) Numéro de dépôt: 20768627.0
(22) Date de dépôt: 15.09.2020
(51) Int. Cl.: B60Q 1/00, F21S 41/20, G01S 7/481, G01S 17/931

(54) **DISPOSITIF LUMINEUX D'UN VÉHICULE**
LICHTVORRICHTUNG EINES FAHRZEUGS
LIGHT DEVICE OF A VEHICLE

(30) Priorité: 16.09.2019 FR 1910197
(43) Date de publication de la demande: 27.07.2022
(73) Titulaire: Valeo Vision, 93012 Bobigny Cedex (FR)
(72) Inventeur: RENAUD, Pierre, 93012 BOBIGNY Cedex (FR); PLANCHE, Gregory, 93012 BOBIGNY Cedex (FR); LOZANO, Anthony, 93012 BOBIGNY Cedex (FR); JOERG, Alexandre, 93012 BOBIGNY Cedex (FR)
(74) Mandataire: Valeo Visibility
(86) Numéro de dépôt international: PCT/EP2020/075782
(87) Numéro de publication internationale: WO 2021/052972

(56) Documents cités:
- FR-A1- 3 055 042
- FR-A1- 3 062 891
- US-A1- 2018 229 645
- US-A1- 2019 126 813

## Description

La présente invention se rapporte à un dispositif lumineux d'un véhicule. Elle trouve une application particulière mais non limitative dans les véhicules automobiles.

Dans le domaine des véhicules automobiles, un dispositif lumineux d'un véhicule connu de l'homme du métier comprend un boîtier, une source de lumière disposée dans le boîtier, un capteur disposé dans le boîtier et configuré pour acquérir de l'information à l'extérieur du véhicule sur la base d'une lumière invisible, et un capot pour fermer ledit boîtier et comprenant une première partie recouvrant la source de lumière et une deuxième partie recouvrant le capteur, dans lequel la deuxième partie a une capacité de transmission de la lumière visible plus faible que la première partie. La deuxième partie a un aspect gris ou noir et fait également office de fonction esthétique. Un tel dispositif est connu de FR 3 055 042 A1.

Un inconvénient de cet état de la technique est que la deuxième partie qui fait office de fonction esthétique de ce fait couvre une grande partie du capot, et les rayons lumineux tels que les infrarouges provenant de l'extérieur du véhicule qui passent donc au travers de la deuxième partie qui s'étend sur une grande surface, dégradent des éléments du dispositif lumineux qui se trouvent derrière cette deuxième partie, tels que des composants électroniques ou ledit boîtier.

Dans ce contexte, la présente invention vise à proposer un dispositif lumineux qui permet de résoudre l'inconvénient mentionné.

A cet effet, l'invention propose un dispositif lumineux d'un véhicule comprenant au moins une source de lumière, au moins un capteur configuré pour acquérir de l'information à l'extérieur du véhicule sur la base des infrarouges, et un capot comprenant une première partie recouvrant ladite au moins une source de lumière et une deuxième partie opaque à la lumière visible et aux infrarouges, ledit capot comprenant en outre une troisième partie opaque à la lumière visible et transparente aux infrarouges, sensiblement centrée sur ledit au moins un capteur et intégrée dans la deuxième partie.

Ainsi, comme on va le voir en détail ci-après, la troisième partie qui est intégrée dans la deuxième partie et centrée sur le capteur, permet d'avoir une zone qui laisse passer les infrarouges mais qui est limitée en termes de taille. Par conséquent les rayons lumineux qui arrivent de l'extérieur du véhicule ne peuvent pas dégrader les zones intérieures du dispositif lumineux puisqu'ils n'ont qu'une très faible surface pour passer au travers du capot.

Selon des modes de réalisation non limitatifs, le dispositif lumineux peut comporter en outre une ou plusieurs caractéristiques supplémentaires prises seules ou selon toutes les combinaisons techniquement possibles, parmi les suivantes.

Selon un mode de réalisation non limitatif, ledit au moins un capteur est un lidar.

Selon un mode de réalisation non limitatif, ledit dispositif lumineux comprend une pluralité de sources de lumière.

Selon un mode de réalisation non limitatif, ledit dispositif lumineux comprend une pluralité de capteurs.

Selon un mode de réalisation non limitatif, ledit capot est réalisé en poly-méthacrylate de méthyle ou en polycarbonate.

Selon un mode de réalisation non limitatif, ladite troisième partie comprend une capacité de transmission de la lumière visible plus faible que ladite première partie.

Selon un mode de réalisation non limitatif, ladite au moins une source de lumière est une source de lumière à semi-conducteur, halogène, xénon, ou laser.

Selon un mode de réalisation non limitatif, ledit dispositif lumineux est un projecteur avant ou un feu arrière.

Selon un mode de réalisation non limitatif, ladite deuxième partie et ladite troisième partie sont recouvertes par ladite première partie dudit capot qui est nappée sur elles.

Selon un mode de réalisation non limitatif, ladite première partie, ladite deuxième partie et ladite troisième partie dudit capot sont disposées bord-à-bord.

Selon un mode de réalisation non limitatif, ladite première partie, ladite deuxième partie et ladite troisième partie dudit capot sont injectées.

Selon un mode de réalisation non limitatif, ladite première partie, ladite deuxième partie et ladite troisième partie sont surmoulées.

Selon un mode de réalisation non limitatif, ladite première partie, ladite deuxième partie et ladite troisième partie sont assemblées.

Selon un mode de réalisation non limitatif, deux parties desdites première partie, deuxième partie et troisième partie sont surmoulées et l'autre partie desdites première partie, deuxième partie et troisième partie est assemblée avec au moins une desdites deux parties surmoulées, ou inversement.

Selon un mode de réalisation non limitatif, ladite deuxième partie a une capacité de transmission de la lumière visible plus faible que ladite première partie.

Selon un mode de réalisation non limitatif, ladite deuxième partie a une capacité de transmission des infrarouges plus faible que ladite troisième partie.

Selon un mode de réalisation non limitatif, ladite troisième partie recouvre ledit au moins un capteur. Elle est disposée en regard dudit au moins un capteur.

L'invention et ses différentes applications seront mieux comprises à la lecture de la description qui suit et à l'examen des figures qui l'accompagnent :
[Fig. 1] illustre schématiquement un dispositif lumineux d'un véhicule, ledit dispositif lumineux comprenant un boîtier, au moins une source de lumière, au moins un capteur et un capot, selon un mode de réalisation non limitatif de l'invention,
[Fig. 2] illustre une vue de face du dispositif lumineux de la figure 1, selon un mode de réalisation non limitatif,
[Fig. 3] illustre une vue de face du boîtier du dispositif lumineux de la figure 2, selon un mode de réalisation non limitatif,
[Fig. 4] illustre une vue arrière du capot dispositif lumineux de la figure 2, selon un mode de réalisation non limitatif,
[Fig. 5] illustre une première vue en coupe dudit capot de la figure 4, selon un premier mode de réalisation non limitatif,
[Fig. 6] illustre une vue zoomée d'une partie de la première vue en coupe dudit capot de la figure 5, selon un mode de réalisation non limitatif,
[Fig. 7] illustre une vue zoomée d'une partie de la première vue en coupe dudit capot de la figure 5, selon un mode de réalisation non limitatif,
[Fig. 8] illustre une deuxième vue en coupe dudit capot de la figure 4, selon un deuxième mode de réalisation non limitatif,
[Fig. 9] illustre une vue zoomée d'une partie de la deuxième vue en coupe dudit capot de la figure 8, selon un mode de réalisation non limitatif,
[Fig. 10] illustre une vue zoomée d'une partie de la deuxième vue en coupe dudit capot de la figure 8, selon un mode de réalisation non limitatif.

Les éléments identiques, par structure ou par fonction, apparaissant sur différentes figures conservent, sauf précision contraire, les mêmes références.

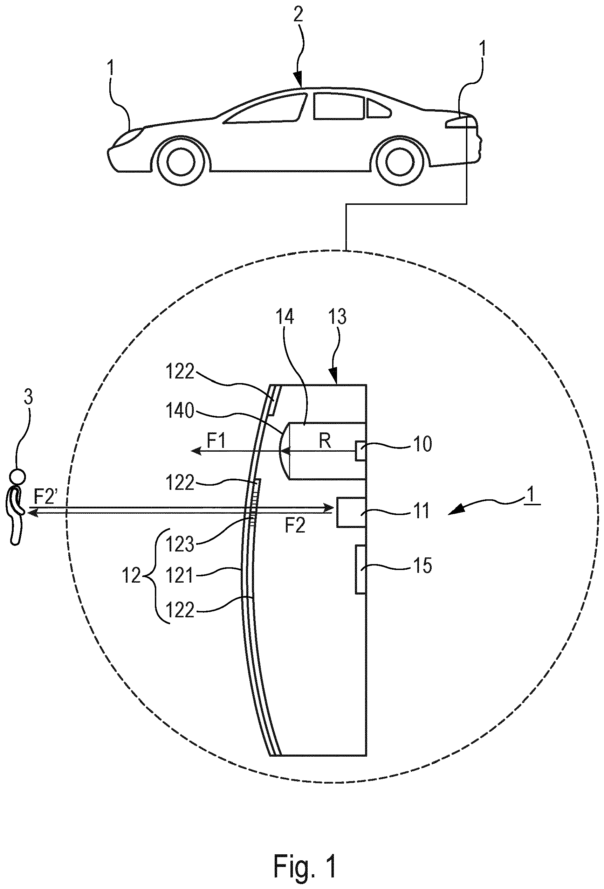

Le dispositif lumineux 1 d'un véhicule 2 est décrit en référence aux figures 1 à 10. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule est ainsi autrement appelé véhicule automobile.

Dans des exemples non limitatifs, le dispositif lumineux 1 est un projecteur avant ou un feu arrière.

Tel qu'illustré sur la figure 1, dans un mode de réalisation non limitatif, le dispositif lumineux 1 comprend :
- au moins une source de lumière 10,
- au moins un capteur 11,
- un capot 12,
- un boîtier 13.

Le dispositif lumineux 1 comprend en outre un dispositif de pilotage 15 de ladite au moins une source de lumière 10. Dans un mode de réalisation non limitatif, le dispositif lumineux 1 comprend une pluralité de sources de lumière 10. Dans un mode de réalisation non limitatif, le dispositif lumineux 1 comprend une pluralité de capteurs 11.

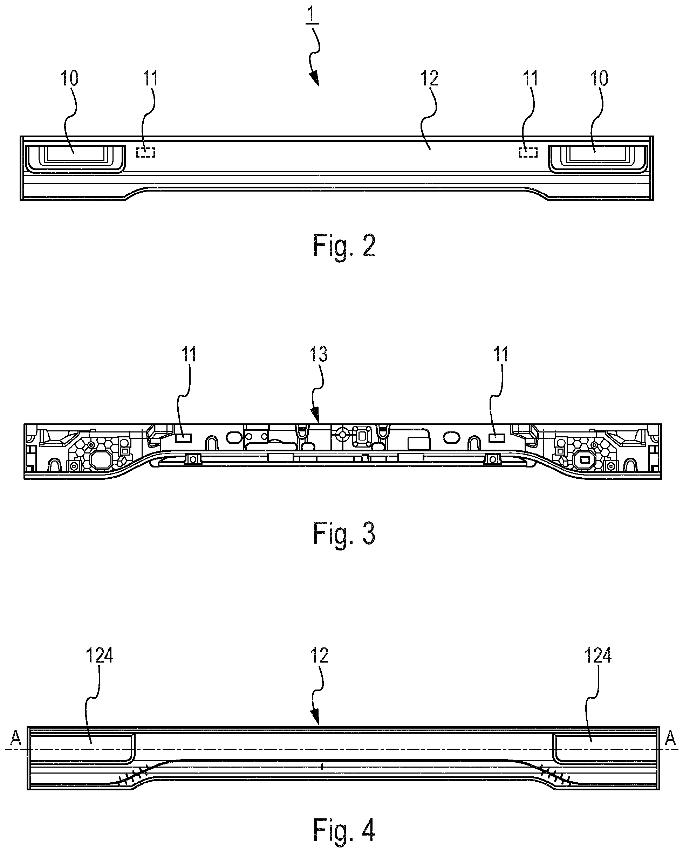

La figure 2 illustre un exemple non limitatif d'un dispositif lumineux 1 qui est un feu arrière de coffre. Il comprend deux sources de lumière 10 et deux capteurs 11. Les capteurs 11 se trouvent derrière le capot 12. Ils sont ainsi illustrés en pointillés sur la figure 2.

Tel qu'illustré sur la figure 3, les capteurs 11 sont positionnés dans le boîtier 13. Le boîtier 13 est refermé par le capot 12. La source de lumière 10 et le capteur 11 sont disposés dans le boîtier 13. Le dispositif de pilotage 15 est également disposé dans le boîtier 13 tel qu'illustré sur l'exemple non limitatif de la figure 1. Il peut être déporté dans un autre exemple non limitatif non illustré.

Dans un mode de réalisation non limitatif, la source de lumière 10 fait partie d'un module optique 14 illustré sur la figure 1, ledit module optique 14 comprenant en outre au moins une lentille et/ou un réflecteur 140. Tel qu'illustré sur la figure 1, la source de lumière 10 est configurée pour émettre des rayons lumineux R. Ces rayons lumineux R ont une longueur d'onde qui fait partie de la lumière visible. Les rayons lumineux R coopèrent avec la lentille et/ou le réflecteur 140 dudit module optique 14 de sorte à former tout ou partie d'un faisceau lumineux primaire F1. Ainsi, dans des modes de réalisation non limitatifs, le module optique 14 est configuré pour former tout ou partie d'un faisceau de signalisation (type feu diurne, feu de position, feu antibrouillard, clignotant), et/ou d'un faisceau d'éclairage (feu de route dit « High Beam » en langage anglo-saxon, feu de croisement dit « Low Beam » en langage anglo-saxon). Dans un mode de réalisation non limitatif, la source de lumière 10 est une source de lumière à semi-conducteur. Dans un mode de réalisation non limitatif, la source de lumière 10 à semi-conducteur fait partie d'une diode électroluminescente. Par diode électroluminescente, on entend tout type de diodes électroluminescentes, que ce soit dans des exemples non limitatifs des LED (« Light Emitting Diode »), une OLED (« Organic LED ») ou une AMOLED (« Active-Matrix-Organic LED »), ou encore une FOLED (« Flexible OLED »). Dans d'autres exemples non limitatifs, la source de lumière 10 est halogène, xénon ou laser.

Le capteur 11 est configuré pour acquérir de l'information à l'extérieur du véhicule 2 sur la base des infrarouges. Dans un mode de réalisation non limitatif, le capteur 11 est un lidar. Le lidar 11 est configuré pour émettre un faisceau lumineux infrarouge F2 et recevoir en retour l'écho F2' (illustré sur la figure 1) pour mesurer la distance d'un objet 3 (ici un piéton dans un exemple non limitatif) se trouvant à l'extérieur du véhicule automobile 2. L'écho est la réflexion du faisceau lumineux infrarouge F2 sur ledit objet 3. Dans un mode de réalisation non limitatif, le lidar 11 mesure le temps de parcours entre le faisceau lumineux infrarouge F2 émis et son écho F2' qui est la lumière réfléchie provenant du faisceau lumineux infrarouge F2. Ainsi, il utilise la technique de temps de vol, dite TOF, appelée dans le langage anglo-saxon « Time Of Flight ». On rappelle que les infrarouges ont une longueur d'onde de 700 nanomètres à 1 millimètre, et la longueur d'onde de fonctionnement d'un lidar est de 905 nanomètres. A partir de ce temps de parcours, de manière connue de l'homme du métier, une distance de l'objet 3 au véhicule automobile 2 peut être déterminée.

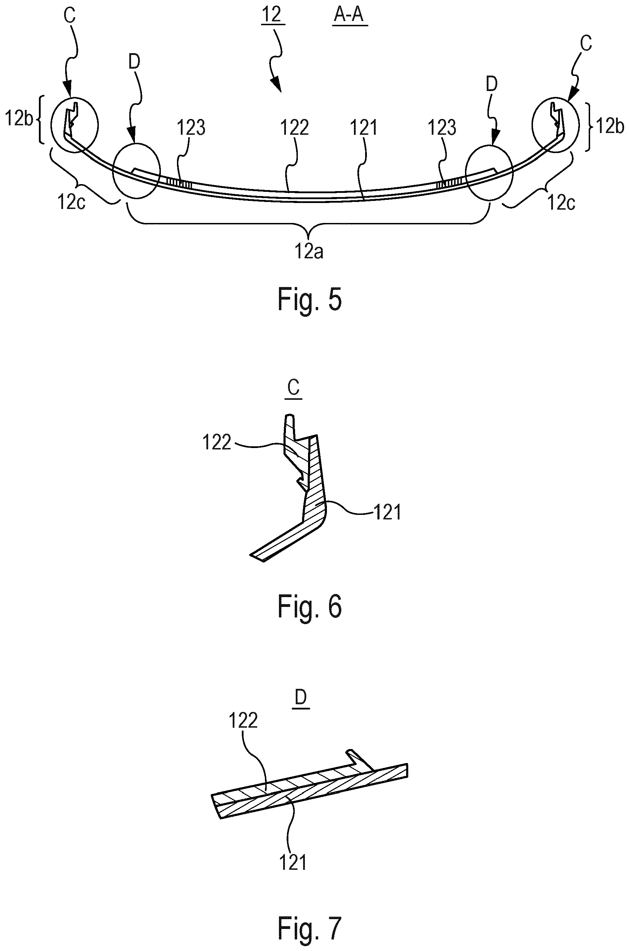

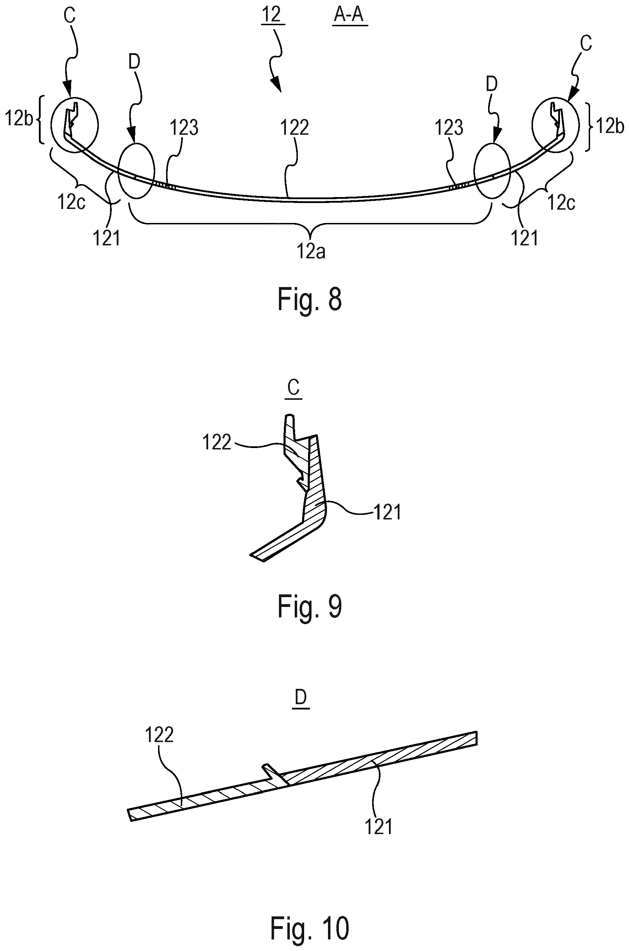

Le capot 12 permet de fermer le boîtier 13. Tel qu'illustré sur la figure 4, il comprend au moins une zone de lumière 124 configurée pour laisser passer le faisceau lumineux primaire F1 de la source de lumière 10. Dans l'exemple non limitatif pris, il comprend deux zones de lumière 124. Tel qu'illustré sur les figures 5 et 8, le capot 12 comprend une partie centrale 12a, des extrémités 12b et des bords 12c. On notera que les bords 12c sont adjacents de chaque côté à la partie centrale 12a du capot 12 et les extrémités 12b sont adjacentes chacune à un bord 12c du capot 12. Dans un autre mode de réalisation non limitatif non illustré, le capot 12 ne comprend pas d'extrémités 12b, mais uniquement une partie centrale 12a et des bords 12c. Le mode de réalisation non limitatif avec les extrémités 12b est pris comme exemple non limitatif dans la suite de la description.

Tel qu'illustré sur les figures 1, 5 et 8, le capot 12 comprend :
- une première partie 121,
- une deuxième partie 122,
- une troisième partie 123.

Les figures 5 et 8 représentent des coupes de la figure 4 selon un axe A-A représenté sur la figure 4.

Tel qu'illustré sur la figure 1, la première partie 121 recouvre la source de lumière 10. Comme on peut le voir sur la figure 1, la première partie 121 est ainsi disposée en regard de la source de lumière 10. Dans un mode de réalisation non limitatif, elle est disposée à distance de la source de lumière 10. La première partie 121 est transparente. Elle laisse passer la lumière visible et les infrarouges. Le faisceau lumineux primaire F1 généré par le module optique 14 passe à travers la première partie 121 du capot 12 pour éclairer une zone à l'extérieur du véhicule 2. Dans un premier mode de réalisation non limitatif illustré sur les figures 1 et 5, la première partie 121 recouvre également le capteur 11. La première partie 121 est disposée à distance dudit capteur 11. Ainsi, le faisceau lumineux infrarouge F2 traverse la troisième partie 123 (décrite plus loin) mais également la première partie 121. Dans un deuxième mode de réalisation non limitatif illustré sur la figure 8, la première partie 121 ne recouvre pas le capteur 11. Ainsi, le faisceau lumineux infrarouge F2 traverse uniquement la troisième partie 123.

Dans un premier mode de réalisation non limitatif illustrée sur la figure 5, la première partie 121 s'étend sur toute la longueur du capot 12 et recouvre toute la deuxième partie 122 que ce soit sur la partie centrale 12a du capot 12 ou sur les extrémités 12b du capot 12. Dans un mode de réalisation non limitatif illustré, la première partie 121 touche la deuxième partie 122. Sur les figures 6 et 7, on peut voir la première partie 121 qui recouvre la deuxième partie 122. Ainsi, la première partie 121 recouvre la deuxième partie 122 et la troisième partie 123. Dans un deuxième mode de réalisation non limitatif illustré sur la figure 8, la première partie 121 s'étend sur une partie du capot 12 et ne recouvre qu'en partie la deuxième partie 122 sur les extrémités 12b tel qu'illustré sur la figure 9. La première partie 121 est adjacente à la deuxième partie 122 sur la partie centrale 12a du capot 12 tel qu'illustré sur les figures 8 et 10. Lorsque le capot 12 ne présente pas d'extrémités 12b, la première partie 121 ne recouvre pas la deuxième partie 122. Ainsi, la première partie 121 ne recouvre qu'en partie la deuxième partie 122 sur les extrémités 12b du capot 12 et pas la troisième partie 123, ou ne recouvre ni la deuxième partie 122 ni la troisième partie 123.

Dans un mode de réalisation non limitatif, la première partie 121 dudit capot 12 est réalisée en en poly-méthacrylate de méthyle, autrement appelé PMMA, ou en polycarbonate, autrement appelé PC. Dans une variante de réalisation non limitative, lorsque le dispositif lumineux 1 est un projecteur avant, la première partie 121 est réalisée en PC. Dans une variante de réalisation non limitative, lorsque le dispositif lumineux 1 est un feu arrière, la première partie 121 est réalisée en PC ou PMMA. L'utilisation du PC s'explique par sa résistance mécanique, en particulier sa résistance aux chocs. De plus, lorsque la thermique est trop élevée dans le feu arrière, dans une variante de réalisation non limitative, la première partie 121 est réalisée en PC.

La deuxième partie 122 fait office d'élément esthétique permettant de différencier sur le plan esthétique le dispositif lumineux 1 des autres dispositifs lumineux. La deuxième partie 122 est opaque à la lumière visible et aux infrarouges. Dans un mode de réalisation non limitatif, elle peut être de différente couleur. Ainsi, dans des exemples non limitatifs, elle est de couleur rouge, grise ou noire. Dans un exemple non limitatif, lorsque le dispositif lumineux 1 est un projecteur avant, elle est de couleur noire et lorsqu'il est un feu arrière, elle est de couleur rouge, grise ou noire. Tel qu'illustré sur la figure 1, la deuxième partie 122 ne recouvre pas le capteur 11 ni la source de lumière 10. Elle n'est ainsi pas disposée en regard du capteur 11. Elle n'est pas non plus disposée en regard de la source de lumière 10. La deuxième partie 122 a une capacité de transmission de la lumière visible plus faible que la première partie 121 ; à savoir elle ne permet pas le passage de la lumière visible. Par ailleurs, la deuxième partie 122 a une capacité de transmission des infrarouges plus faible que la troisième partie 123 ; à savoir elle ne permet pas le passage des infrarouges. Le faisceau lumineux primaire F1 généré par le module optique 14 ne peut ainsi pas traverser cette deuxième partie 122. De la même manière, le faisceau lumineux F2 généré par le capteur 11 ne peut pas traverser cette deuxième partie 122. Ainsi, elle filtre la lumière visible et les infrarouges, à savoir leurs longueurs d'onde. Ainsi, la deuxième partie 122 qui fait office de fonction esthétique et par conséquent couvre une grande surface du capot 12 n'est pas dédiée infrarouges et donc n'est pas dédiée au capteur 11.

Dans un premier mode de réalisation non limitatif illustrée sur la figure 5, la deuxième partie 122 est totalement recouverte par la première partie 121 sur toute la longueur du capot 12 que ce soit sur la partie centrale 12a du capot 12 ou sur les extrémités 12b du capot 12. Dans un deuxième mode de réalisation non limitatif illustrée sur la figure 8, la deuxième partie 122 est adjacente à la première partie 121 sur la partie centrale 12a du capot 12b et est recouverte par la première partie 121 sur les extrémités 12b du capot 12. Tel qu'illustré sur les figures 5 et 8, la deuxième partie 122 s'étend en partie sur la partie centrale 12a du capot 12 (sauf au niveau de la troisième partie 123) et sur les extrémités 12b du capot 12 mais pas sur les bords 12c du capot 12 au niveau desquels se trouvent les sources de lumière 10.

Dans un mode de réalisation non limitatif, la deuxième partie 122 dudit capot 12 est réalisée en poly-méthacrylate de méthyle, autrement appelé PMMA, ou en polycarbonate, autrement appelé PC. Dans une variante de réalisation non limitative, lorsque le dispositif lumineux 1 est un projecteur avant, la deuxième partie 122 est réalisée en PC. Dans une variante de réalisation non limitative, lorsque le dispositif lumineux 1 est un feu arrière, la deuxième partie 122 est réalisée en PC ou en PMMA. On notera que le PC est plus résistant que le PMMA et permet notamment de protéger le dispositif lumineux 1 (dans le cas d'un projecteur avant) des graviers qui se seraient projetés sur ledit dispositif lumineux 1 lorsque le véhicule 2 roule par exemple. De plus, lorsque la thermique est trop élevée dans le feu arrière, dans une variante de réalisation non limitative, la deuxième partie 122 est réalisée en PC.

La troisième partie 123 est transparente aux infrarouges, à savoir elle laisse passer la lumière infrarouge, contrairement à la deuxième partie 122. La troisième partie 123 est opaque à la lumière visible. Elle recouvre le capteur 11. Comme on peut le voir sur la figure 1, la troisième partie 123 est ainsi disposée en regard du capteur 11. Dans un mode de réalisation non limitatif, elle est disposée à distance dudit capteur 11. Ainsi, le faisceau lumineux infrarouge F2 généré par le capteur 11 passe au travers de cette troisième partie 123 et éclaire une zone à l'extérieur du véhicule 2. Par contre, de même que pour la deuxième partie 122, la lumière visible est filtrée par cette troisième partie 123. Lorsque le faisceau lumineux infrarouge F2 atteint un objet 3, la lumière réfléchie F2' par l'objet 3 correspondante passe à travers de la troisième partie 123 et est détectée par le capteur 11. La troisième partie 123 comprend une capacité de transmission de la lumière visible plus faible que la première partie 121 ; à savoir, la troisième partie 123 ne permet pas le passage de la lumière visible. Ainsi, elle filtre la lumière visible, à savoir ses longueurs d'onde. Tel qu'illustré sur la figure 1, la troisième partie 123 est sensiblement centré sur le capteur 11 pour permettre à tout le faisceau lumineux infrarouge F2 généré par ledit capteur 11 de le traverser et de se réfléchir sur un objet 3 qui passe devant ledit capteur 11. Le capteur 11 est ainsi plus efficace. En outre, tel qu'illustré sur la figure 5 et la figure 8, la troisième partie 123 est intégrée dans la deuxième partie 122. La troisième partie 123 représente une zone très limitée du capot 12 qui est ainsi transparente aux infrarouges. Dans un mode de réalisation non limitatif, la troisième partie 123 comprend une surface de taille sensiblement égale à la surface du capteur 11 à une tolérance d'intégration ε près du capteur 11 dans le dispositif lumineux 1 afin d'être sûr de recouvrir complètement le capteur 11. Dans un mode de réalisation non limitatif, la tolérance d'intégration ε est comprise entre quelques dixièmes de millimètres et un ou deux millimètres. Cela permet de prendre en compte les tolérances dimensionnelles sur les pièces, jeux d'assemblages mécaniques etc. Dans un autre mode de réalisation non limitatif, dans le cas où il existe une pluralité de capteurs 11 proches l'un de l'autre, la troisième partie 123 recouvre lesdits capteurs 11 afin de simplifier le design du capot 12 et améliorer sa faisabilité en production série. Cela évite d'avoir une petite surface de deuxième partie 122 à intégrer entre les capteurs 11 proches.

Ainsi, si des rayons lumineux chargés en infrarouges viennent de l'extérieur et traversent la troisième partie 123, ils ne dégradent pas les éléments (tels que les composants électroniques ou le boîtier) du dispositif lumineux 1 qui se trouvent derrière le capot 12, puisque la surface de la troisième partie 123 est limitée. Ainsi, les éléments ne risquent pas de brûler. On appelle couramment ce problème « Sunburn » dans le langage anglo-saxon. En outre, comme la troisième partie 123 représente une zone limitée, le coût de fabrication est réduit. En effet, la matière pour obtenir une troisième partie 123 transparente aux infrarouges représente un certain coût. On notera que le fait d'intégrer la troisième partie 123 dans la deuxième partie 122 peut permettre de simplifier la fabrication du capot 12.

Dans un premier mode de réalisation non limitatif illustré sur la figure 5, la troisième partie 123 est recouverte par la première partie 121 lorsque la deuxième partie 122 est recouverte entièrement par la première partie 121. Dans un mode de réalisation non limitatif illustré, la troisième partie 123 touche la première partie 121. Dans un deuxième mode de réalisation non limitatif illustré sur la figure 8, la troisième partie 123 n'est pas recouverte par la première partie 121, lorsque la deuxième partie 122 est adjacente à la première partie 121 sur la partie centrale 12a du capot 12 et sur les extrémités 12b du capot 12.

Dans un mode de réalisation non limitatif, la troisième partie 123 dudit capot 12 est réalisée en PMMA ou en PC. Dans une variante de réalisation non limitative, la troisième partie 123 est réalisée en PC lorsque le dispositif lumineux 1 est un projecteur avant. Dans une autre variante de réalisation non limitative, la troisième partie 123 est réalisée en PC ou en PMMA lorsque le dispositif lumineux 1 est un feu arrière. On notera que le matériau utilisé pour la troisième partie 123 dédiée au capteur 11 est plus coûteux que celui utilisé pour la deuxième partie 122 ou la première partie 121.

Le capot & »est réalisé selon un procédé de fabrication décrit ci-après selon deux modes de réalisation.

Pour réaliser le capot 12, un moule (non illustré) dédié au capot 12 est utilisé. Le moule est composé de plusieurs cavités pour réaliser le capot 12, chaque cavité correspondant à une partie du capot 12. Ainsi, le moule comprend une cavité pour la première partie 121, une cavité pour la deuxième partie 122 et une cavité pour la troisième partie 123. La première partie 121, la deuxième partie 122 et la troisième partie 123 sont injectées dans leur cavité respective.

Dans un premier mode de réalisation non limitatif, la première partie 121, la deuxième partie 122 et la troisième partie 123 sont surmoulées. Le capot 12 est ainsi tri-injecté. Ainsi, dans un exemple non limitatif, pour obtenir la première partie 121 qui est nappée sur la deuxième partie 122 et la troisième partie 123, la matière de la deuxième partie 122 est injectée dans la cavité du moule prévue à cet effet. Puis la matière de la troisième partie 123 est injectée dans la cavité du moule prévue à cet effet, ou vice et versa. Enfin, la matière de la première partie 121 est injectée dans la cavité du moule prévue à cet effet. On obtient ainsi la première partie qui est nappée sur l'ensemble des matières de la deuxième partie 122 et de la troisième partie 123. Ainsi, ladite deuxième partie 122 et ladite troisième partie 123 sont recouvertes par ladite première partie 121 qui est nappée sur elles. Ainsi, dans un autre exemple non limitatif, pour obtenir la première partie 121, la deuxième partie 122 et la troisième partie 123 disposées bord à bord, la matière de la première partie 121 est injectée dans la cavité du moule prévue à cet effet. Puis la matière de la deuxième partie 122 est injectée dans la cavité du moule prévue à cet effet et la matière de la troisième partie 123 dans la cavité du moule prévue à cet effet ou inversement. Le fait d'injecter la première partie 121 en premier au lieu de la deuxième partie 122 évite d'avoir des refontes locales de la matière de la deuxième partie 122 aux zones frontières qui seraient trop visibles.

Dans un deuxième mode de réalisation non limitatif, la première partie 121, la deuxième partie 122 et la troisième partie 123 sont assemblées. Ainsi, dans un exemple non limitatif, on obtient la première partie 121, la deuxième partie 122 et la troisième partie 123 disposées bord à bord. Dans des exemples non limitatifs, l'assemblage s'effectue par collage soudure, clipsage etc.

Dans un troisième mode de réalisation non limitatif, on peut combiner l'assemblage et le surmoulage. Par exemple, on peut surmouler deux parties entre elles et assembler une troisième partie avec la ou les deux autres parties. Ainsi, deux parties desdites première partie 121, deuxième partie 122 et troisième partie 123 sont surmoulées et l'autre partie desdites première partie 121, deuxième partie 122 et troisième partie 123 est assemblée avec au moins une desdites deux parties surmoulées, ou inversement.

Bien entendu la description de l'invention n'est pas limitée aux modes de réalisation décrits ci -dessus et au domaine décrit ci-dessus.

Ainsi, l'invention décrite présente notamment les avantages suivants :
- elle évite d'endommager les éléments (composants électroniques, boîtier etc.) se trouvant derrière le capot 12,
- elle permet de différencier la zone dédiée à la fonction esthétique du capot de la zone dédiée à la fonction passage des infrarouges ; ainsi contrairement à l'état de la technique antérieur, elle n'utilise pas toute la surface de la deuxième zone pour laisser passer les infrarouges, mais une autre surface, celle de la troisième zone pour laisser passer les infrarouges,
- elle permet d'avoir une zone réduite du capot 12 dédiée au capteur 12. Elle réduit ainsi les coûts de fabrication du capot 13

.

## Revendications

1. Dispositif lumineux (1) d'un véhicule (2) comprenant au moins une source de lumière (10), au moins un capteur (11) configuré pour acquérir de l'information à l'extérieur du véhicule (2) sur la base des infrarouges, un boîtier (13) refermé par un capot (12), ledit capot (12) comprenant une première partie (121) recouvrant ladite au moins une source de lumière (10) et une deuxième partie (122) opaque à la lumière visible et aux infrarouges, ledit capot (12) comprenant en outre une troisième partie (123) opaque à la lumière visible et transparente aux infrarouges, sensiblement centrée sur ledit au moins un capteur (11) et intégrée dans la deuxième partie (122).

2. Dispositif lumineux (1) selon la revendication 1, selon lequel ledit au moins un capteur (11) est un lidar.

3. Dispositif lumineux (1) selon l'une quelconque des revendications précédentes, selon lequel ledit dispositif lumineux (1) comprend une pluralité de sources de lumière (10).

4. Dispositif lumineux (1) selon l'une quelconque des revendications précédentes, selon lequel ledit dispositif lumineux (1) comprend une pluralité de capteurs (11).

5. Dispositif lumineux (1) selon l'une quelconque des revendications précédentes, selon lequel ledit capot (12) est réalisé en poly-méthacrylate de méthyle (PMMA) ou en polycarbonate (PC).

6. Dispositif lumineux (1) selon l'une quelconque des revendications précédentes, selon lequel ladite troisième partie (123) comprend une capacité de transmission de la lumière visible plus faible que la première partie (121).

7. Dispositif lumineux (1) selon l'une quelconque des revendications précédentes, selon lequel ladite au moins une source de lumière (10) est une source de lumière à semi-conducteur, halogène, xénon, ou laser.

8. Dispositif lumineux (1) selon l'une quelconque des revendications précédentes, selon lequel ledit dispositif lumineux (1) est un projecteur avant ou un feu arrière.

9. Dispositif lumineux (1) selon l'une quelconque des revendications précédentes, selon lequel ladite deuxième partie (122) et ladite troisième partie (123) sont recouvertes par ladite première partie (121) dudit capot (12) qui est nappée sur elles.

10. Dispositif lumineux (1) selon l'une quelconque des revendications précédentes 1 à 8, selon lequel ladite première partie (121), ladite deuxième partie (122) et ladite troisième partie (123) dudit capot (12) sont disposées bord-à-bord.

11. Dispositif lumineux (1) selon l'une quelconque des revendications précédentes, selon lequel ladite première partie (121), ladite deuxième partie (122) et ladite troisième partie (123) dudit capot (12) sont injectées.

12. Dispositif lumineux (1) selon la revendication précédente, selon lequel ladite première partie (121), ladite deuxième partie (122) et ladite troisième partie (123) sont surmoulées.

13. Dispositif lumineux (1) selon la revendication précédente 11, selon lequel ladite première partie (121), ladite deuxième partie (122) et ladite troisième partie (123) sont assemblées.

14. Dispositif lumineux (1) selon la revendication précédente 11, selon lequel deux parties desdites première partie (121), deuxième partie (122) et troisième partie (123) sont surmoulées et l'autre partie desdites première partie (121), deuxième partie (122) et troisième partie (123) est assemblée avec au moins une desdites deux parties surmoulées, ou inversement.

## Patentansprüche

1. Leuchtvorrichtung (1) eines Fahrzeugs (2), umfassend mindestens eine Lichtquelle (10), mindestens einen Sensor (11), der dazu ausgestaltet ist, Information außerhalb des Fahrzeugs (2) auf der Basis von Infrarotstrahlung zu erfassen, ein Gehäuse (13), das von einer Abdeckung (12) verschlossen wird, wobei die Abdeckung (12) einen ersten Teil (121), der die mindestens eine Lichtquelle (10) bedeckt, und einen zweiten Teil (122), der für das sichtbare Licht und für Infrarotstrahlung undurchlässig ist, umfasst, wobei die Abdeckung (12) ferner einen dritten Teil (123) umfasst, der für das sichtbare Licht undurchlässig ist und für Infrarotstrahlung transparent ist, im Wesentlichen auf den mindestens einen Sensor (11) zentriert ist und in den zweiten Teil (122) integriert ist.

2. Leuchtvorrichtung (1) nach Anspruch 1, wobei der mindestens eine Sensor (11) ein Lidar ist.

3. Leuchtvorrichtung (1) nach einem der vorhergehenden Ansprüche, wobei die Leuchtvorrichtung (1) eine Mehrzahl von Lichtquellen (10) umfasst.

4. Leuchtvorrichtung (1) nach einem der vorhergehenden Ansprüche, wobei die Leuchtvorrichtung (1) eine Mehrzahl von Sensoren (11) umfasst.

5. Leuchtvorrichtung (1) nach einem der vorhergehenden Ansprüche, wobei die Abdeckung (12) aus Polymethylmethacrylat (PMMA) oder aus Polycarbonat (PC) hergestellt ist.

6. Leuchtvorrichtung (1) nach einem der vorhergehenden Ansprüche, wobei der dritte Teil (123) eine geringere Kapazität zur Transmission des sichtbaren Lichts als der erste Teil (121) umfasst.

7. Leuchtvorrichtung (1) nach einem der vorhergehenden Ansprüche, wobei die mindestens eine Lichtquelle (10) eine Halbleiter-, Halogen-, Xenon- oder Laserlichtquelle ist.

8. Leuchtvorrichtung (1) nach einem der vorhergehenden Ansprüche, wobei die Leuchtvorrichtung (1) ein Scheinwerfer oder eine Heckleuchte ist.

9. Leuchtvorrichtung (1) nach einem der vorhergehenden Ansprüche, wobei der zweite Teil (122) und der dritte Teil (123) von dem ersten Teil (121) der Abdeckung (12) bedeckt werden, der auf sie gelegt ist.

10. Leuchtvorrichtung (1) nach einem der vorhergehenden Ansprüche 1 bis 8, wobei der erste Teil (121), der zweite Teil (122) und der dritte Teil (123) der Abdeckung (12) Rand an Rand angeordnet sind.

11. Leuchtvorrichtung (1) nach einem der vorhergehenden Ansprüche, wobei der erste Teil (121), der zweite Teil (122) und der dritte Teil (123) der Abdeckung (12) gespritzt sind.

12. Leuchtvorrichtung (1) nach dem vorhergehenden Anspruch, wobei der erste Teil (121), der zweite Teil (122) und der dritte Teil (123) angeformt sind.

13. Leuchtvorrichtung (1) nach dem vorhergehenden Anspruch 11, wobei der erste Teil (121), der zweite Teil (122) und der dritte Teil (123) montiert sind.

14. Leuchtvorrichtung (1) nach dem vorhergehenden Anspruch 11, wobei zwei Teile des ersten Teils (121), des zweiten Teils (122) und des dritten Teils (123) angeformt sind und das andere Teil des ersten Teils (121), des zweiten Teils (122) und des dritten Teils (123) an mindestens eines der angeformten Teile montiert ist oder umgekehrt.

## Claims

1. Lighting device (1) for a vehicle (2) comprising at least one light source (10), at least one sensor (11) configured to acquire information outside the vehicle (2) based on infrared, a housing (13) closed by a cover (12), said cover (12) comprising a first portion (121) covering said at least one light source (10) and a second portion (122) that is opaque to visible light and to infrared, said cover (12) further comprising a third portion (123) that is opaque to visible light and transparent to infrared, substantially centred on said at least one sensor (11) and integrated into the second portion (122).

2. Lighting device (1) according to Claim 1, wherein said at least one sensor (11) is a lidar.

3. Lighting device (1) according to either one of the preceding claims, wherein said lighting device (1) comprises a plurality of light sources (10).

4. Lighting device (1) according to any one of the preceding claims, wherein said lighting device (1) comprises a plurality of sensors (11).

5. Lighting device (1) according to any one of the preceding claims, wherein said cover (12) is made of poly(methyl methacrylate) (PMMA) or of polycarbonate (PC).

6. Lighting device (1) according to any one of the preceding claims, wherein said third portion (123) comprises a transmission capacity for visible light that is lower than the first portion (121).

7. Lighting device (1) according to any one of the preceding claims, wherein said at least one light source (10) is a semiconductor, halogen, xenon, or laser light source.

8. Lighting device (1) according to any one of the preceding claims, wherein said lighting device (1) is a headlight or a tail light.

9. Lighting device (1) according to any one of the preceding claims, wherein said second portion (122) and said third portion (123) are covered by said first portion (121) of said cover (12) which is coated over them.

10. Lighting device (1) according to any one of the preceding Claims 1 to 8, wherein said first portion (121), said second portion (122) and said third portion (123) of said cover (12) are arranged edge to edge.

11. Lighting device (1) according to any one of the preceding claims, wherein said first portion (121), said second portion (122) and said third portion (123) of said cover (12) are injected.

12. Lighting device (1) according to the preceding claim, wherein said first portion (121), said second portion (122) and said third portion (123) are overmolded.

13. Lighting device (1) according to the preceding Claim 11, wherein said first portion (121), said second portion (122) and said third portion (123) are assembled together.

14. Lighting device (1) according to the preceding Claim 11, wherein two portions of said first portion (121), second portion (122) and third portion (123) are overmolded and the other portion of said first portion (121), second portion (122) and third portion (123) is assembled together with at least one of said two overmolded portions, or vice versa.
